## Europäisches Patentamt

## European Patent Office

## Office européen des brevets

(11) Veröffentlichungsnummer: **0 003 722**
**B1**

(12) **EUROPÄISCHE PATENTSCHRIFT**

(45) Veröffentlichungstag der Patentschrift:
**25.11.81**

(21) Anmeldenummer: **79810015.2**

(22) Anmeldetag: **12.02.79**

(51) Int. Cl.³: **F 16 K 17/04,** F 16 K 1/42,
B 60 C 23/00 // B60C29/00

(54) Einrichtung zum Ausgleichen und Ueberwachen des Druckes in mindestens zwei Druckräumen, insbesondere in Luftbereifungen eines Fahrzeuges.

(30) Priorität: **13.02.78 CH 1559/78**

(43) Veröffentlichungstag der Anmeldung:
**22.08.79 Patentblatt 79/17**

(45) Bekanntmachung des Hinweises auf die Patenterteilung:
**25.11.81 Patentblatt 81/47**

(84) Benannte Vertragsstaaten:
**BE FR IT NL**

(56) Entgegenhaltungen:
**CH-A-570 281**
**GB-A-814 148**
**US-A-1 622 332**
**US-A-1 882 455**

(73) Patentinhaber: **Etter-Felix, Hansruedi,**
**Mooswiesenstrasse 4, CH-9322 Egnach (CH)**

(72) Erfinder: **Etter-Felix, Hansruedi, Mooswiesenstrasse 4,**
**CH-9322 Egnach (CH)**

(74) Vertreter: **Schmauder, Klaus Dieter et al, c/o Schmauder**
**& Wann Patentanwaltsbüro Nidelbadstrasse 75,**
**CH-8038 Zürich (CH)**

Einrichtung zum Ausgleichen und Überwachen des Druckes in mindestens
zwei Druckräumen, insbesondere in Luftbereifungen eines Fahrzeuges

Die Erfindung betrifft eine Einrichtung gemäß Oberbegriff des Anspruches 1.

Eine Einrichtung der genannten Art ist beispielsweise aus der CH-PS 570 281 bekannt. Dabei besteht das Ventilglied aus einem in einem Zylinder angeordneten Kolben, wobei ein erster Bodenbereich des Zylinderbodens den Ventilsitz bildet und ein zweiter Bodenbereich einen Wandungsteil der Druckkammer. Der Kolben ist fliegend gelagert und mittels einer Manschette, beispielsweise eines Balges oder Wellrohres mit der Zylinderwand verbunden, so daß der Druckraum abgedichtet ist. Der eine Verbindungskanal des Druckraumes mündet in den Ventilsitz, während der andere Verbindungskanal des anderen Druckraumes direkt in die Druckkammer mündet. Bei bestimmten Betriebsbedingungen erweist sich diese Ausbildung als unzureichend. Eine solche Betriebsbedingung liegt beispielsweise vor, wenn in dem Reifen, der über den Verbindungskanal mit der Druckkammer der Einrichtung verbunden ist, vorübergehend Luft entweicht, so daß der Druck in diesem Reifen nachläßt und das Schließen des Ventilgliedes veranlaßt. Steigt nun der Druck in diesem Reifen beispielsweise durch Walkarbeit oder starke Sonneneinstrahlung wieder an, so kann dies zum erneuten Öffnen des Ventilgliedes führen und einen erneuten Druckausgleich bewirken. Dies hat zur Folge, daß aus dem intakten Reifen weiter Luft in den beschädigten Reifen übertritt, bis das Ventilglied wieder schließt. Eine solche Druckverminderung in dem an sich intakten Reifen führt zu einer weiteren, schädigenden Druckabsenkung in dem intakten Reifen. Dies kann zu unzulässigen Betriebszuständen und schließlich zur Beschädigung des Reifens führen.

Aufgabe der Erfindung ist es, eine Einrichtung der eingangs genannten Art so auszubilden, daß das Ventilglied auch dann geschlossen bleibt, wenn in einem Druckraum eine Druckerhöhung über den Nenndruck auftritt.

Die gestellte Aufgabe wird duch die kennzeichnenden Merkmale des Anspruches 1 gelöst.

Dadurch, daß sämtliche Verbindungskanäle aller Druckräume im Ventilsitz münden, kann sich bei geschlossenem Ventilglied keiner der Drücke aus den einzelnen Druckräumen in der Druckkammer auswirken und zu einem Öffnen des Ventilgliedes führen, selbst dann nicht, wenn in einem der Druckräume ein höherer Druck herrschen sollte als der Nenndruck. Dies rührt daher, daß die Summe der Querschnittsflächen aller Mündungsöffnungen der Verbindungskanäle kleiner ist als die der Druckkammer zugewandte freie Fläche des Ventilgliedes, so daß die Drücke in allen Verbindungskanälen nicht ausreichen, um das Ventilglied zum Abheben zu bringen, dies auch dann nicht, wenn in einem der Verbindungskanäle ein Überdruck herrschen sollte.

Eine besonders gute Abdichtung des Ventilgliedes an den Mündungsöffnungen wird durch die Merkmale des Anspruches 2 und insbesondere des Anspruches 3 erzielt.

Die Ansprüche 4 und 5 umschreiben besonders vorteilhafte Ausgestaltungen der Einrichtung.

Obwohl die Einrichtung besonders geeignet ist zum Ausgleich und zur Überwachung des Druckes in Luftbereifungen eines Fahrzeuges, eignet sie sich jedoch auch zum Ausgleich und zur Überwachung der Drücke von Druckräumen allgemeiner Art, so beispielsweise für Druckkammern eines Wasserfahrzeuges. Die Einrichtung ist besonders für gasförmige Medien geeignet. Es sind jedoch auch Anwendungsfälle denkbar, bei denen hydraulische Medien zum Einsatz kommen.

Ausführungsbeispiele der Erfindung werden nachfolgend anhand der Zeichnungen näher beschrieben, dabei zeigen:

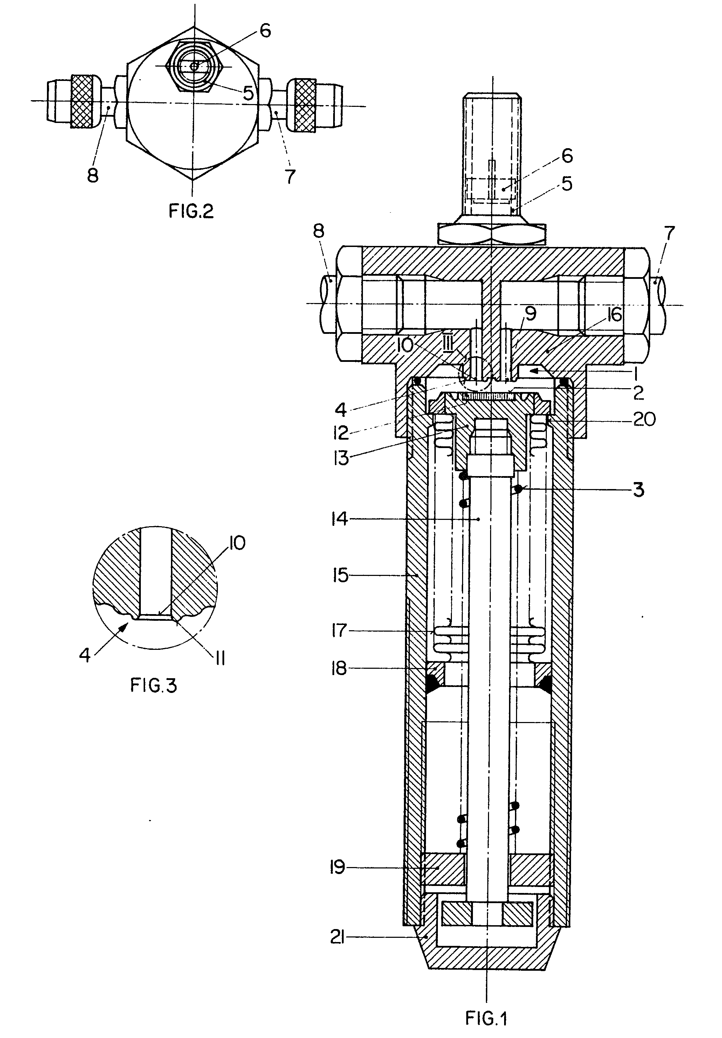

Fig. 1 eine Einrichtung im Längsschnitt;

Fig. 2 die Einrichtung der Fig. 1 im Grundriß; und

Fig. 3 das Detail III der Fig. 1 in größerem Maßstab.

Die in den Figuren gezeigte Einrichtung zum Ausgleichen und Überwachen des Druckes in mindestens zwei Druckräumen ist insbesondere für die Luftbereifungen von Fahrzeugen geeignet. Die Einrichtung weist eine Druckkammer 1 auf, deren eine Wandung durch ein Ventilglied 2 gebildet ist, welches mittels einer Vorspannfeder 3 gegen einen Ventilsitz 4 vorgespannt ist. In die Druckkammer 1 mündet eine Zuleitung 5, die mittels eines Rückschlagventils 6 absperrbar ist. Verbindungskanäle 7 und 8 dienen zum Anschluß der nicht dargestellten Druckräume, die beispielsweise Luftreifen von Fahrzeugen sind. Die Verbindungskanäle 7 und 8 münden jeweils in den Ventilsitz 4. Die der Druckkammer zugewandte freie Fläche des Ventilgliedes ist wesentlich größer als die Summe der Querschnittsflächen der Mündungsöffnungen 9 und 10 der Verbindungskanäle 7 und 8.

Wie insbesondere aus Fig. 3 hervorgeht, sind die Mündungsöffnungen 9 und 10 mit Dichtlippen 11 versehen, die gegen das Ventilglied 2 weisen. Das Ventilglied 2 ist mit einer den Dichtlippen 11 zugewandten Dichtung 12 ausgestattet, die aus einem elastischen Material besteht, das durch die Dichtlippen verdrängbar ist, so daß ein sicherer Abschluß zwischen dem Ventilglied und den Mündungsöffnungen gewährleistet ist.

Im vorliegenden Ausführungsbeispiel wird das Ventilglied 2 durch einen Kolben 13 gebildet, der an einer Kolbenstange 14 befestigt ist und fliegend gelagert ist. Der Kolben 13 ist in einem Zylinder 15 angeordnet, dessen Zylinderboden 16 in zwei Bereiche aufgeteilt ist, wobei ein erster Bodenbereich des Zylinderbodens den Ventilsitz 4 bildet und ein zweiter Bodenbereich einen Wandungsteil der Druckkammer 1. Zur Abdichtung des Kolbens 13 gegenüber der Zylinderwand dient eine als Wellrohr 17 ausgebildete Manschette, die einerseits an dem Kolben 13 und andererseits über einen Innenring 18 an der Zylinderwand mediumsdicht angeordnet ist. Die Vorspannfeder 3 dient zum Vorspannen des Kolbens 13 gegen den Ventilsitz 4. Mittels einer in den Zylinder 15 eingeschraubten Stellschraube 19 kann die Vorspannkraft der Vorspannfeder eingestellt werden. Die Öffnungsbewegung des Kolbens 13 wird durch einen Anschlag 20 begrenzt.

Das dem Ventilsitz 4 gegenüberliegende Ende des Zylinders 15 ist mittels einer Verschlußkappe 21 vorzugsweise mediumsdicht abgeschlossen. Letzteres ist insbesondere dann von Vorteil, wenn die Einrichtung einem rauhen Betrieb ausgesetzt ist, wie dies beispielsweise bei der Überwachung der Luftbereifung von Fahrzeugen der Fall ist. Zur Vermeidung von Kondensatbildung ist es zweckmäßig, den Zylinderraum vor dem Verschließen mit trockener Luft bzw. trockenem Gas zu füllen. Gegebenenfalls kann im Zylinderraum ein Unterdruck herrschen.

Zum Ausgleich und zur Überwachung des Druckes in der Luftbereifung eines Fahrzeuges kann die Einrichtung beispielsweise wie folgt ausgelegt sein. Soll der Nenndruck in einem Reifen beispielsweise 8 bar betragen, so öffnet das Ventilglied 2, wenn an der Zuleitung 5 mindestens ein Druck von 9 bar angelegt wird. Das Ventilglied 2 schließt, sobald der Druck in der Druckkammer 1 unter 7 bar sinkt. Sind nun die Luftreifen über die Zuleitung 5, die Druckkammer 1 und die Verbindungskanäle 7 und 8 auf den Nenndruck von 8 bar aufgepumpt, so bleibt also das Ventilglied 2 offen. Sinkt nun der Druck in einem der Luftreifen, so bleibt das Ventilglied 2 offen und es kann ein Druckausgleich von einem Verbindungskanal über die Druckkammer in den anderen Verbindungskanal stattfinden. Erst wenn der Gesamtdruck unter 7 bar sinkt, schließt das Ventilglied 2 und es kann kein Druckausgleich mehr stattfinden. Steigt der Druck in einem der Luftreifen beispielsweise durch übermäßige Erwärmung wieder an, so kann dieser Druckanstieg das Ventilglied 2 nicht öffnen, da der durch den Öffnungsquerschnitt der Mündungsöffnung an das Ventilglied 2 angelegte Druck sich nur auf eine Fläche des Ventilgliedes 2 auswirkt, die dem Querschnitt der Mündungsöffnung entspricht. Dieser Druck reicht, selbst wenn er beträchtlich höher ist als der Nenndruck des Reifens, nicht aus, um das Ventilglied zu öffnen. Damit ist sichergestellt, daß ein einmal geschlossenes Ventilglied 2 durch einen Überdruck in den angeschlossenen Druckräumen nicht geöffnet werden kann, sondern erst durch erneute Zufuhr von Druckmittel über die Zuleitung 5.

Bei einem plötzlichen Druckabfall in einem der Druckräume schließt das Ventilglied 2 sofort.

Im Gegensatz zum dargestellten Ausführungsbeispiel sind noch verschiedene andere Ausgestaltungen der Einrichtung möglich. Insbesondere kann das Ventilglied auch als Membrane ausgebildet sein, die zwischen den Wandungen einer Druckkammer eingespannt ist. Die Einrichtung kann auch mit Anzeigemitteln ausgestattet sein, die das Schließen des Ventilgliedes anzeigt. Eine solche Anzeige kann durch mechanische oder elektrische Signale erfolgen.

**Patentansprüche**

1. Einrichtung zum Ausgleichen und Überwachen des Druckes in mindestens zwei Druckräumen, insbesondere in Luftbereifungen eines Fahrzeuges, mit einer Druckkammer, in die eine absperrbare Zuleitung unmittelbar mündet, wobei ein Teil der Wandung der Druckkammer durch ein Ventilglied gebildet ist, das mittels einer Vorspannfeder gegen einen Ventilsitz vorgespannt ist, in welchem der Verbindungskanal eines Druckraumes mündet, wobei die der Druckkammer zugewandte freie Fläche des Ventilgliedes größer ist als die Querschnittsfläche der Mündung des durch das Ventilglied verschließbaren Verbindungskanals, dadurch gekennzeichnet, daß die Verbindungskanäle (7, 8) aller Druckräume im Ventilsitz (4) münden und mittels des Ventilgliedes (2) verschließbar sind, wobei die Querschnittsflächen aller Mündungsöffnungen untereinander gleich sind und wobei die Summe der Querschnittsflächen aller Mündungsöffnungen (9, 10) der Verbindungskanäle (7, 8) kleiner ist als die bei geschlossenem Ventilglied (2) der Druckkammer (1) zugewandte freie Fläche des Ventilgliedes (2).

2. Einrichtung nach Anspruch 1, dadurch gekennzeichnet, daß die Mündungsöffnungen (9, 10) gegen das Ventilglied (2) weisende Dichtlippen (11) aufweisen.

3. Einrichtung nach Anspruch 1 oder 2, dadurch gekennzeichnet, daß das Ventilglied (2) eine den Mündungsöffnungen (9, 10) zugewandte Dichtung (12) aus einem durch die Dichtlippen (11) verdrängbaren elastischen Material aufweist.

4. Einrichtung nach mindestens einem der Ansprüche 1 bis 3, dadurch gekennzeichnet, daß das Ventilglied (2) ein in einem Zylinder (15) angeordneter Kolben (13) ist, wobei ein erster Bodenbereich des Zylinderbodens (16) den Ventilsitz (4) bildet und ein zweiter Bodenbereich einen Wandungsteil der Druckkammer (1).

5. Einrichtung nach Anspruch 4, dadurch gekennzeichnet, daß der Kolben (13) mittels einer Kolbenstange (14) fliegend gelagert ist und mittels einer Manschette, vorzugsweise eines Wellrohres (17), die Druckkammer (1) abdichtend, mit der Zylinderwand verbunden ist.

## Claims

1. A device for equalising and controlling the pressure in at least two pressure volumes, particularly in pneumatic tires of a vehicle, comprising a pressure chamber, into which a lockable line directly opens, wherein a portion of the wall of the pressure chamber is formed by a valve member, said valve member being urged by means of a bias spring towards a valve seat into which a connecting passageway of a pressure volume opens, the active free area of the valve member facing towards the pressure chamber being larger than the cross-sectional area of the orifice of the connecting passageway, closeable by said valve member, characterized in that the passageways (7, 8) of all the pressure volumes open into the valve seat (4) and are closeable by the valve member (2) and the cross-sectional areas of all the orifices are of the same size and the sum of the cross-sectional areas of all the orifices (9, 10) of the passageways (7, 8) is smaller than the active free area of the valve member (2) facing towards the pressure chamber (1) when closed.

2. A device according to claim 1, characterized in that the orifices (9, 10) have sealing lips (11) facing towards the valve member (2).

3. A device according to claim 1 or 2, characterized in that the valve member (2) has a gasket (12) facing towards the orifices (9, 10) and thwe gasket is made of material which can be displaced by the sealing lips.

4. A device according to at least one of claims 1 to 3, characterized in that the valve member is a piston (13) disposed in a cylinder (15) and a first region of the cylinder bottom (16) forms the valve seat (4) and a second region of the cylinder bottom forms a wall portion of the pressure chamber (1).

5. A device according to claim 4, characterized in that the piston (13) is mounted on the tapered end of a piston rod (14) and connected to the cylinder wall by a sleeve preferably a corrugated tube (17) so as to seal the pressure chamber (1).

## Revendications

1. Dispositif d'équilibrage et de contrôle de la pression dans au moins deux enceintes sous pression, en particulier dans les pneus d'un véhicule automobile, comportant une chambre de pression dans laquelle débouche directement un conduit pouvant être obturé, une partie de la paroi de cette chambre de pression étant constituée par un élément de soupape qui est sollicité au moyen d'un ressort de tension contre un siège de soupape dans lequel débouche le conduit de liaison d'une enceinte sous pression, la surface libre de l'élément de soupape qui est tournée vers la chambre de pression étant plus grande que la section de l'embouchure du conduit de liaison pouvant être fermée par l'élément de soupape, caractérisé en ce que les conduits de liaison (7, 8) de toutes les enceintes sous pression débouchent dans le siège de soupape (4) et peuvent être fermés par l'élément de soupape (2), les sections de toutes les ouvertures des embouchures (9, 10) des canaux de liaison (7, 8) étant égales entre elles et leur somme étant inférieure à l'aire de la surface libre de l'élément de soupape (2) tournée vers la chambre de pression, dans la position de fermeture de l'élément de soupape (2).

2. Dispositif selon la revendication 1, caractérisé en ce que les ouvertures des embouchures (9, 10) présentent des lèvres d'étanchéité (11) dirigées vers l'élément de soupape (2).

3. Dispositif selon la revendication 1 ou 2, caractérisé en ce que l'élément de soupape (2) présente un organe d'étanchéité (12) tourné vers les embouchures (9, 10) et constitué d'un matériau élastique pouvant être enfoncé élastiquement par les lèvres d'étanchéité (11).

4. Dispositif selon au moins l'une des revendications 1 à 3, caractérisé en ce que l'élément de soupape (2) est constitué par un piston (13) logé dans un cylindre (15), une première zone du fond (16) du cylindre formant le siège de soupape (4) tandis qu'une deuxième zone de ce fond constitue une partie de la paroi de la chambre de pressions (1).

5. Dispositif selon la revendication 4, caractérisé en ce que le piston (13) est monté déplaçable au moyen d'une tige de piston (14) et est relié à paroi du cylindre, au moyen d'une garniture, de préférence formée d'un manchon ondulé, qui assure l'étanchéité de la chambre de pression.

FIG.2

FIG.3

FIG.1